# EUROPÄISCHE PATENTANMELDUNG

(11) **EP 1 036 549 A2**
(43) Veröffentlichungstag der Anmeldung: **20.09.2000**
(21) Anmeldenummer: 00104959.2
(22) Anmeldetag: 08.03.2000
(51) Int. Cl.: A61C 13/263

(54) **Klebebrücke**

(30) Priorität: 17.03.1999 DE 19911976
(71) Anmelder: Stuhlreiter, Helmut, Dr., 83435 Bad Reichenhall (DE)
(72) Erfinder: Stuhlreiter, Helmut, Dr., 83435 Bad Reichenhall (DE)
(74) Vertreter: Haft, von Puttkamer, Berngruber, Czybulka

(57) **Zusammenfassung**

Eine Brücke mit einem mit wenigstens einem Zahn (3) verkleideten Gerüst weist einen in seiner Länge auf die Breite der Zahnlücke einstellbaren Schaft (1) auf, dessen Enden zum Einführen in Rillen (4, 5) ausgebildet, die vom okklusalen bzw. incisalen bis lingualen Bereich in den Bereich des Zentrums der Approximalflächen der die Lücke (2) begrenzenden Zähne (6, 7) verlaufen und durch Versenken eines Schleifkörpers (10) mit zylinderförmiger Schleiffläche in die Seitenflächen der Zähne (6, 7) gebildet sind. Die Enden des Schafts (1) sind als an die Seitenfläche der Zähne (6, 7) anklebbare Stirnflächen mit einem in die Rille (4, 5) eingeklebten Vorsprung (13, 14) ausgebildet sind. Zur Einstellung seiner Länge auf die Breite der Zahnlücke (2) umfaßt der Schaft (7) zwei Teile umfaßt, welche jeweils über einen Vorsprung (13, 14) und eine Stirnfläche verfügen.

## Beschreibung

Die Erfindung bezieht sich auf eine Klebebrücke nach dem Oberbegriff des Anspruchs 1.

Derartige Klebebrücken sind bekannt. Dabei wird eine Zahnlücke durch Kleben von Zwischengliedern an die Nachbarzähne der Lücke geschlossen. Dazu werden geeignete Auflagen bzw. Ausnehmungen zur besseren Adaption in die Nachbarzähne der Lücke geschliffen und dann ein Zwischenglied mit individuell und damit zwangsläufig relativ aufwendigen und teuren Metallkonstruktionen vom Zahntechniker durch Gießen von Dentallegierungen gefertigt. Diese haben in der Regel Fortsätze, die genau zu den vorher geschaffenen Ausnehmungen passen und die Klebefläche und Stabilität erhöhen. Teilweise werden auch in einem ersten Schritt exakt passende Anker in entsprechende Ausnehmungen an die Nachbarzähne geklebt und in einem zweiten Schritt ebenfalls dazu passende individuell gefertigte Zwischenglieder damit verklebt. Teilweise sind dazu teure Spezialwerkzeuge zusätzlich zu Fertigteilen erforderlich.

Weitere Nachteile der bekannten Verfahren sind immer aufwendige und damit teuere individuelle Gerüstfertigung aus Dentallegierungen mit häufig im Mund sichtbaren kosmetisch ungünstigen Metallanteilen. Außerdem besteht die Möglichkeit von Allergien und Gewebereizungen durch Metallionen, die im Mundmilieu aus gegossenen Dentallegierungen freigesetzt werden können.

Aus DE 33 35 642 A1, US 3,641,670 und EP 0 242 639 A1 sind Brücken nach dem Oberbegriff des Anspruchs 1 bekannt. Die Enden des Schaftes werden dabei intrakoronal in den Ausnehmungen in den Zähnen mit einem Füllmaterial befestigt. Damit kein Bruch der Brücke auftritt, müssen die Ausnehmungen eine erhebliche Tiefe besitzen, was zu einer Gefährdung der vitalen Pulpa führt. Zudem besteht bei den großen Ausnehmungen die Schwierigkeit, sie exakt passend herauszubohren. Damit ist keine exakte Endposition der Brücke erzielbar. Dies hat beispielsweise zur Folge, daß die Basalfläche des künstlichen Zahnes nicht exakt parodontalfrei formbar ist.

Aus US 4,877,400 ist ein Stabilisierungsteil für eine Vollkeramikbrücke bekannt. DE 32 04 186 C2 beschreibt die Stabilisierung von Zähnen mit einem Haltesplint. Aus "Fiberglasfasern in der Zahnheilkunde" in: dental-labor XXXV, Heft 2/87, S. 180 ist es bekannt, Brücken mit Fiberglasfasern zu verstärken.

Aufgabe der Erfindung ist es, eine einfach herstellbare Brücke hoher Festigkeit in einer exakt reproduzierbaren Endposition ohne größeren Substanzverlust der natürlichen Zahnsubstanz bereitzustellen.

Dies wird erfindungsgemäß mit der im Anspruch 1 gekennzeichneten Brücke erreicht. In den Ansprüchen 2 bis 15 sind vorteilhafte Ausgestaltungen der erfindungsgemäßen Brücke angegeben.

Bei der erfindungsgemäßen Brücke wird das Gerüst durch einen längeneinstellbaren, mit wenigstens einem künstlichen Zahn ummantelten Schaft gebildet. Zur Befestigung des künstlichen Zahnes werden z. B. mit einem handelsüblichen, zylinderförmigen Diamantschleifkörper mit rundem Ende, der genau zu den Schaftenden paßt, in die Seitenflächen der Zähne beiderseits der Zahnlücke Rillen eingefräst. Der Schleifkörper wird dazu einfach in die Zähne versenkt, sodass zwei definierte parallele Rillen entstehen, also Rillen mit einer dem Diamantschleifkörper entsprechenden Breite und Tiefe, deren Enden im Bereich des Zentrums der Approximalflächen liegen und möglichst gleichen Abstand zum Zahnhals haben sollen. An den basalseitigen geschlossenen Enden der Rillen liegt der Schaft mit seinen beiden Enden auf, wodurch der künstliche Zahn genau positioniert verklebt werden kann. Die Rillen verlaufen vom okklusalen Bereich der Seitenzähne oder incisalen Bereich der Schneidzähne zum Bereich des Zentrums der Approximalflächen, also etwa in Zahnlängsrichtung. Sie können jedoch auch vom lingualen Bereich aus zum Bereich des Zentrums der Approximalflächen verlaufen, also quer zur Zahnlängsrichtung oder vom einen Bereich zwischen dem okklusalen bzw. incisalen Bereich und dem lingualen Bereich aus, also schräg zur Zahnlängsrichtung.

Um die Klebefläche an den natürlichen Zähnen zu vergrößern sind an den Enden der Brücke mit den Zähnen verklebbare Stirnflächen vorgesehen, von denen ein Vorsprung in die eine bzw. andere Rille ragt. Für eine gute Passung ist es vorteilhaft, wenn die der Lücke zugewandten Approximalflächen der Zähne möglichst planparallel sind, sodass die Zähne vor dem Einschleifen der Rille durch leichtes Beschleifen parallelisiert werden sollten, um das Ankleben an den Stirnflächen zu verbessern.

Die beiden Stirnflächen werden vorzugsweise durch Scheiben gebildet. Um ein Verdrehen der Brücke um die Schaftachse zu verhindern, können die Schaftenden bzw. die Vorsprünge an den Schaftstirnseiten bzw. Scheiben in Rillenlängsrichtung eine Länge aufweisen, die größer ist als die Breite der Rille. Da ein Schaft mit derart länglich ausgebildeten Enden bzw. Vorsprüngen exakt parallel verlaufende Rillen beiderseits der Zahnlücke voraussetzt, weist vorzugsweise nur der Vorsprung an einem Ende der Brücke zur Verdrehsicherheit in Rillenlängsrichtung eine Länge auf, die größer ist als die Breite der Rille, während der Vorsprung an dem anderen Schaftende als runder Zapfen ausgebildet ist, der einen dem Durchmesser der Rille entsprechenden Durchmesser aufweist. Die derart ausgebildete Brücke kann auch in nicht genau parallelen Rillen beiderseits der Zahnlücke befestigt werden.

Damit beide Scheiben möglichst parallel zu den Approximalflächen der Zähne beiderseits der Zahnlücke positioniert werden können, an denen die eingeschliffenen Rillen normalerweise in gleicher Höhe eingeschliffen wurden, ist der länglich ausgebildete Vorsprung normalerweise exzentrisch angeordnet. Eine veränderte oder verdrehte Anordnung des länglichen Vorsprungs wäre eventuell vorteilhaft (zum Beispiel unterschiedliche Höhen der Enden der eingeschliffenen Rillen).

Die Längeneinstellbarkeit des Schaftes des Gerüsts der erfindungsgemäßen Brücke kann in verschiedener Weise realisiert werden.

So kann der Schaft zur Einstellung seiner Länge auf die Breite der Zahnlücke aus zwei ablängbaren Teilen bestehen, die jeweils über einen Vorsprung und eine Stirnfläche verfügen. Die beiden ablängbaren Teile, einschließlich der Stirnflächen und Vorsprünge sind vorzugsweise einstückig ausgebildet. Sie weisen achsparallele plane Flächen auf, um sie miteinander verkleben zu können. Zur Bildung eines im Querschnitt runden Schaftes sind die beiden Schaftteile vorzugsweise im Querschnitt halbrund ausgebildet. Bei dieser Ausführungsform werden die beiden Schaftteile also an ihren Berührungsflächen miteinander verklebt. Damit sich die gemeinsame Klebefläche möglichst über die gesamte Länge der Schaftteile erstreckt, sind die beiden Schaftteile vorzugsweise auf gleiche Länge ablängbar ausgebildet.

Nach einer anderen Ausführungsform besteht der Schaft zur Einstellung seiner Länge auf die Breite der Zahnlücke aus wenigstens zwei ineinander beweglichen Teilen. So kann der Schaft aus einem hülsenförmigen Schaftteil und einem in das hülsenförmige Schaftteil steck- oder schraubbar oder in anderer Weise einführbaren stiftförmigen Schaftteil bestehen. Statt zwei Schaftteilen kann auch ein mittleres drittes Schaftteil vorgesehen sein, auf oder in das die beiden Schaftteile mit dem Vorsprung und der Stirnfläche gesteckt oder geschoben oder in anderer Weise verbunden werden können, um den Schaft auf die Breite der Zahnlücke einzustellen.

Der Schaft bzw. die Schaftteile, einschließlich der Vorsprünge und Stirnflächen können mit einem Opaquer versehen werden.

Um die Festigkeit des Schaftes zu vergrößern, aber auch um Material zur Verblendung zu sparen, wird der Schaft vorzugsweise mit einer Umhüllung versehen, die mit dem Schaft verklebt wird.

Die Umhüllung kann durch Umwickeln des Schaftes mit einem Faden oder Fasern erfolgen, die mit dem Schaft verklebt werden. Die Verstärkungsfasern können in der Umhüllung zumindest teilweise auch in Hauptbelastungsrichtung der Brücke orientiert sein. So können an der basalseitigen Längsseite des Schaftes in Schaftlängsrichtung verlaufende Fasern angeordnet werden, um die dort besonders hohen auf den Schaft einwirkenden Zugkräfte aufzunehmen. Die Umhüllung kann dazu aus einem Röhrchen bestehen, in die die beiden mit Klebstoff versehenen Schaftteile von einem bzw. anderen Ende her eingeführt und miteinander und mit dem Röhrchen verklebt werden.

Die Faden-Umwicklung bzw. die Verstärkungsfasern können durch einen Glasfaserfaden oder Glasfasern gebildet sein.

Der Schaft bzw. die Schaftteile bestehen aus Fertigteilen, und zwar aus Festigkeitsgründen vorzugsweise aus Metall. Um eine feste Klebeverbindung herzustellen, sind der Metall-Schaft bzw. -Schaftteile vorzugsweise oberflächenbehandelt, beispielsweise gestrahlt, silikatisiert, silanisiert und gebondet oder in anderer Weise zum Kleben konditioniert. Um die Silanisierung mit Bonding oder dergleichen chemische Klebekonditionierung nicht zu beeinträchtigen, dürfen die Schaftteile vor dem Verkleben keiner hohen Temperatur ausgesetzt werden, beispielsweise beim Ablängen. Demgemäß sind die ablängbaren Schaftteile vorzugsweise abzwickbar ausgebildet, beispielsweise mit einem Seitenschneider. Dies vermeidet auch eine Verschmutzung der Bondingschicht durch Schleifstaub.

Als Metall für den Schaft bzw. die Schaftteile kann beispielsweise Stahl verwendet werden. Insbesondere wird jedoch Titan wegen seiner Biokompatibilität verwendet, vor allem reines Titan, das keine Fremdionen besitzt, die eine Allergiesierung hervorrufen können. Sollte sich ein nicht metallisches Material für die vorgefertigten Schaftteile als stabil genug erweisen, wäre eine Ausführung aus Keramik oder aus Faserverbundkunststoff denkbar.

Zur Umwicklung bzw. als Verstärkungsfasern werden vorzugsweise Glasfasern eingesetzt. Sie sind im Gegensatz zu Kunststoff nicht nur absolut untoxisch, sondern nach dem Verblenden durchsichtig und damit farbneutral.

Bei beengten Platzverhältnissen können der Metallschaft bzw. die Schaftteile mit den damit einstückig verbundenen Schaftenden mit einem Opaquer, also einer Beschichtung mit einer der Farbe der natürlichen Zähne entsprechenden Farbe, versehen werden. Auch um den Opaquer nicht zu beeinträchtigen, darf beim Ablängen der Schaftteile keine höhere Temperatur zur Einwirkung kommen.

Bei normalen Platzverhältnissen ist es jedoch auch möglich, das Gerüst erst nach dem Aufbringen der Umhüllung mit dem Opaquer zu versehen. Um eine Klebeverbindung hoher Festigkeit zu erhalten, sollte der zum Umwickeln verwendete Faden oder die Fasern silanisiert sein.

Die Herstellung der erfindungsgemäßen Brücke kann in der Zahnarztpraxis erfolgen. Da der künstliche Zahn basal genau angepaßt werden muß, wird vorzugsweise ein Abdruck für ein Gipsmodell hergestellt. Anhand des Modells können die vorgefertigten Schaftteile z.B. entsprechend abgelängt, zusammengeklebt und gegebenenfalls mit der Umhüllung und dem Opaquer versehen werden. Auf dem Modell wird der basale Teil des künstlichen Zahnes normalerweise aus herkömmlichen Materialien, beispielsweise Mikrohybrid-Komposit modelliert und geglättet bzw. poliert. Der übrige Teil des künstlichen Zahnes kann entweder ebenfalls am Modell oder im Mund modelliert werden.

Mit der erfindungsgemäßen Brücke können im Seitenzahnbereich ein bis zwei und im Frontzahnbereich zwei bis drei Zähne ersetzt werden. Da lediglich Rillen im Seitenzahnbereich geschliffen werden müssen, sind zur Befestigung der erfindungsgemäßen Brücke nicht nur unversehrte Zähne, sondern teilweise auch gefüllte Zähne einsetzbar.

Nach einem bevorzugten Ausführungsbeispiel werden erfindungsgemäß zwei im Querschnitt halbrunde, zum Kleben konditionierte halbrunde Schaftteile aus Reintitan verwendet, die nach dem Ablängen mit einem Seitenschneider verklebt werden. Damit entsteht ein ausreichend stabiles Gerüst, das opaquert mit einem silanisiertem Glasfaserfaden entsprechend der Platzverhältnisse umwickelt und mit Bondingkunststoff getränkt wird. Anschließend wird es mit Mikrohybridkunststoff zur gewünschten Zahnform ergänzt.

Die erfindungsgemäße Brücke kann damit auf einfachste Weise schnell mit normalerweise in einer Zahnarztpraxis vorhandenen Geräten und Werkzeugen vom Zahnarzt selbst hergestellt werden. Damit entstehen nur geringe Labor- und Gesamtkosten. Da kein sichtbares Metall vorliegt, wird ein kosmetisch einwandfreies Ergebnis erzielt. Auch ist die Belastung des Patienten gering. So tritt durch das Einschleifen der Rillen nur ein geringer Substanzverlust auf. Es ist nach dem Einschleifen maximal nur eine weitere Sitzung zum Einkleben und ggf. ergänzenden Verblenden sowie Einschleifen des künstlichen Zahnes notwendig. Eine Anästhesie ist in der Regel nicht erforderlich. Zudem können ausschließlich in der Zahnmedizin erprobte Materalien verwendet werden.

Die Fertigstellung des künstlichen Zahnes am Gerüst kann aber auch durch verschiedene andere in der Zahnheilkunde bzw. Zahntechnik bewährte und bekannte Arten erfolgen, sowohl ganz indirekt auf einem Modell oder teilweise direkt im Mund des Patienten durch bewährte moderne Dentalkunststoffe. Dabei kann entweder frei modelliert werden oder es können als Facetten konfektionierte Fertigzähne für sichtbare Zahnteile eingearbeitet werden oder Folienkronen, beispielsweise Frasaco-Strip-Kronen angewendet werden.

Die Facetten können dabei mit dem Gerüst verklebt werden, wobei der Restzahn mit Kunststoff ergänzt wird. Bei Folienkronen, also Hohlformen in Folienstärke, wird die Hohlform im Bereich des Schaftes ausgeschnitten und mit einer Kunststofffüllung über den Schaft zum Aushärten gestülpt. Auch ist eine Kombination mit Keramikinserts in der Kaufläche, Keramikfacetten oder eine Ergänzung mit einem mit Keramik aufbrennbaren und der nötigen Bohrung versehenen Metallteil oder Metallfertigteil, das nach dem Aufbrennen mit den Schaftteilen verklebt wird, denkbar. Aufgrund ihrer schnellen Herstellbarkeit ist die erfindungsgemäße Brücke auch als temporäre provisorische Brücke geeignet.

Zum Ablängen der beiden Schaftteile und/oder zum Umwickeln eines Schafts mit einem Faden oder Fasern, wird vorzugsweise eine Zange verwendet, mit der das jeweilige Schaftteil bzw. der Schaft an einem Ende, vorzugsweise an dem Vorsprung an der Stirnfläche bzw. der Scheibe, der nach dem Einkleben der Brücke in eine der Rillen in den Zahnseitenflächen ragt, ergriffen wird.

Zum Fassen dieses Endes bzw. Vorsprungs sind die Backen der Zange an dem äußeren, vom Zangengelenk abgewandten Backenende an der Innenseite vorzugsweise flach ausgebildet, sodass sie bei geschlossener Zange flächig aufeinander liegen. Zugleich ist an den Innenseiten der äußeren Enden der Backen vorzugsweise jeweils eine Ausnehmung vorgesehen, sodass sich beim flächigen Aufeinanderliegen der Backeninnenseiten eine Ausnehmung mit einem diesem Ende bzw. Vorsprung entsprechenden Querschnitt ergibt, bei einem runden zapfenförmigen Vorsprung also eine runde, sich vorzugsweise in Längenlängsrichtung erstreckende Bohrung, die den Vorsprung aufnimmt. Die Zange kann z. B. einer Arterienklemme entsprechen, die an der Backenspitze abgeflacht ausgebildet ist.

Zum Umwickeln des Schaftes mit einem Faden oder Fasern kann zudem einer der Backen an der Außenseite einen Schlitz aufweisen, in dem ein Ende des Fadens beim Umwickeln eingeklemmt werden kann.

Nachstehend ist eine Ausführungsform der erfindungsgemäßen Brücke anhand der Zeichnung beispielhaft näher erläutert. Darin zeigen
Figur 1 einen natürlichen Zahn an einer Zahnlücke mit einem teilweise dargestellten Gerüst sowie einem Diamantschleifkörper in perspektivischer Wiedergabe; und
Figur 2 und 3 eine Vorderansicht bzw. Draufsicht auf das in Figur 1 teilweise dargestellte Gerüst in einer Zahnlücke, wobei in Figur 2 Teile der beiden natürlichen Zähne weggebrochen sind und in Figur 2 und Figur 3 die Umwicklung im Schnitt dargestellt ist und der künstliche Zahn gestrichelt.

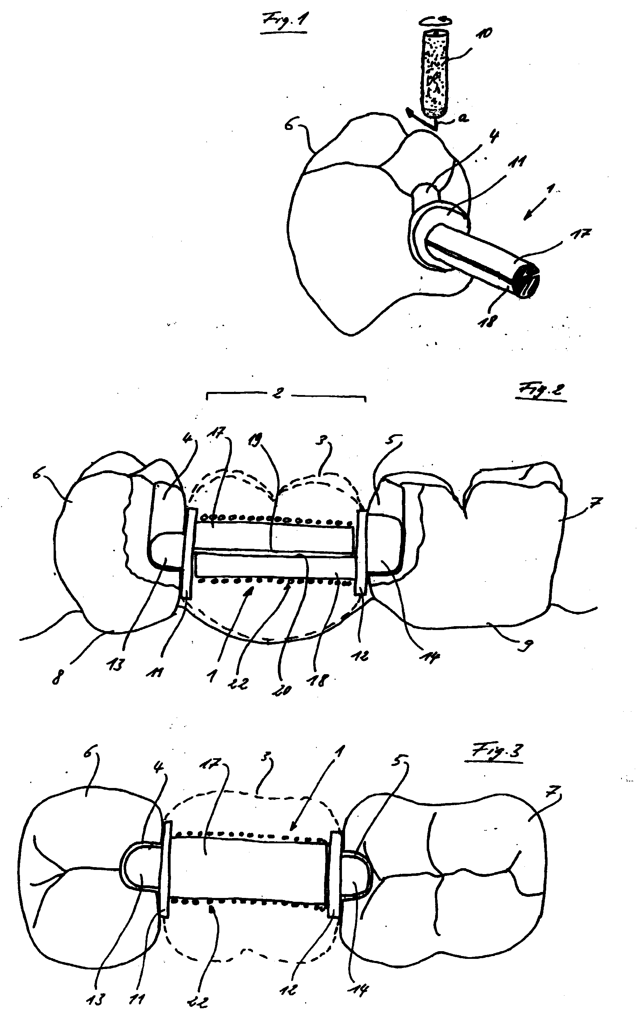

Das Gerüst wird durch einen Schaft 1 gebildet, der in seiner Länge auf die Breite der Zahnlücke 2 einstellbar ist. Der Schaft 1 wird mit einem in Figur 2 und 3 gestrichelt dargestellten künstlichen Zahn 3 ummantelt. Die beiden Enden des Schaftes 1 sind in Rillen 4, 5 in den der Zahnlücke 2 zugewandten Seitenflächen der natürlichen Zähne 6, 7 eingeführt, die z. B. von okklusal ins Zentrum der Approximalfläche der Zähne 6, 7 verlaufen.

Die Rillen 4, 5 werden mit einem Schleifkörper 10 mit zylinderförmiger, zur Drehachse koaxialer Schleiffläche gebildet, der dazu gemäß dem Pfeil a in Figur 1 in die Seitenflächen der Zähne 6, 7 versenkt worden ist. Der vorzugsweise als Diamantschleifkörper ausgebildete Schleifkörper 10 ist am freien Ende rund ausgebildet und war im Querschnitt etwa halbkreisförmig mit einem dem Durchmesser der Vorsprünge 13, 14 entsprechenden Kreisdurchmesser.

An den beiden Enden des Schaftes 1 ist jeweils eine Scheibe 11, 12 vorgesehen, von der ein Vorsprung 13, 14 in die eine bzw. andere Rille 4 bzw. 5 ragt. Die Vorsprünge 13, 14 werden in die Rillen 4, 5 eingeklebt. Die Scheiben 11, 12 bilden Stirnflächen, die mit den Seitenflächen der Zähne 6, 7 verklebt werden. Die Seitenflächen der Zähne 6, 7 sind dazu möglichst planparallel zu den Scheiben 11, 12 angeschliffen. Die Stirnflächen bzw. Scheiben 11, 12 können stattdessen entsprechend der Wölbung der Seitenflächen der Zähne 6, 7 auch leicht konkav ausgebildet sein.

Die beiden Vorsprünge 13, 14 sind unterschiedlich ausgebildet. Das heißt, während der Vorsprung 13 ein im Querschnitt kreisrunder Zapfen mit einem der Breite der Rille 4 entsprechenden Durchmesser ist, weist der Vorsprung 14 in Längsrichtung der Rille 5 eine Länge auf, die größer ist als die Breite der Rille 5. Damit ist gewährleistet, dass sich der Schaft 1 und damit die Brücke nicht um die Schaftlängsachse verdrehen kann. Eine verschobene oder gedrehte Plazierung gegenüber der des Beispiels ist denkbar.

Der längliche Vorsprung 14 an der Scheibe 12 ist zur Schaftlängsachse exzentrisch angeordnet. Im Querschnitt sind die Vorsprünge 13 und 14 entsprechend der Rillen 4, 5 etwa halbkreisförmig an ihren Enden.

Die Rillen 4, 5 sind am nach okklusal zeigenden Ende offen, um die Vorsprünge 13, 14 am Schaft 1 einführen zu können, basalseitig aber geschlossen, um den Schaft 1 abzustücken.

Die basalseitigen Seitenwände 15, 16 beider Rillen 4, 5 liegen etwa in gleicher Höhe. Durch die exzentrische Anordnung des länglichen Vorsprungs 14 ist sichergestellt, dass der Schaft 1 senkrecht und damit die Scheiben 11, 12 flächen- bzw. planparallel zu den Seitenwänden der Zähne 6, 7 verlaufen.

Der Schaft 1 besteht aus zwei Metallteilen 17, 18, vorzugsweise aus Reintitan oder Porzellan. Jedes Schaftteil 17, 18 ist einschließlich der Scheiben 11, 12 und der Vorsprünge 13, 14 einstückig ausgebildet.

Die Schaftteile 17, 18 werden vorzugsweise am Modell auf die der Breite der Zahnlücke 2 entsprechende Länge abgelängt, beispielsweise mit einem Seitenschneider.

Die Schaftteile 17, 18 weisen miteinander verklebbare Flächen 19, 20 auf, die sich über die gesamte Länge der Schaftteile 17, 18, also bis zu den Scheiben 11, 12 erstrecken (Figur 2)

Die zusammengeklebten Flächen 19, 20 sind plan ausgebildet und verlaufen parallel zur Schaftachse. Damit ein Schaft 1 mit rundem Querschnitt gebildet wird, sind die beiden Schaftteile 17, 18 im Querschnitt halbrund ausgebildet (Figur 1).

Zwischen den Scheiben 11, 12 ist auf den Schaft 1 eine Umhüllung 22 geklebt, die durch Umwickeln des Schaftes 1 mit einem Faden, insbesondere einem Glasfaserfaden gebildet wird (Figuren 2 und 3).

Die Oberflächen der beiden Schaftteile 17, 18 einschließlich der Scheiben 11, 12 und der Vorsprünge 13, 17 können mit einem Opaquer abgedeckt werden. Zur Erhöhung der Festigkeit der Klebeverbindung sind sie entsprechend konditioniert, beispielsweise gestrahlt, silikatisiert, silanisiert und gebondet. Ebenso wird ein silanisierter Faden zum Umwickeln verwendet.

## Patentansprüche

1. Brücke mit einem mit wenigstens einem Zahn (3) verkleideten Gerüst, das einen mit dem künstlichen Zahn (3) verkleidbaren, in seiner Länge auf die Breite der Zahnlücke einstellbaren Schaft (1) aufweist, dessen Enden zum Einführen in Ausnehmungen ausgebildet sind, die vom okklusalen bzw. incisalen bis lingualen Bereich in den Bereich des Zentrums der Approximalflächen der die Lücke (2) begrenzenden Zähne (6, 7) verlaufen, dadurch gekennzeichnet, daß die Ausnehmungen durch Versenken eines Schleifkörpers (10) mit zylinderförmiger Schleiffläche in die Seitenflächen der Zähne (6, 7) gebildete Rillen (4, 5) sind, die Enden des Schafts (1) als an die Seitenfläche der Zähne (6, 7) anklebbare Stirnflächen mit einem in die Rille (4, 5) eingeklebten Vorsprung (13, 14) ausgebildet sind, und daß der Schaft (7) zur Einstellung seiner Länge auf die Breite der Zahnlücke (2) zwei Teile umfaßt, welche jeweils über einen Vorsprung (13, 14) und eine Stirnfläche verfügen.

2. Brücke nach Anspruch 1, dadurch gekennzeichnet, daß der Schaft zur Einstellung seiner Länge aus zwei ablängbaren Teilen besteht.

3. Brücke nach Anspruch 1, dadurch gekennzeichnet, daß der Schaft zur Einstellung seiner Länge aus wenigstens zwei ineinander beweglichen Teilen besteht.

4. Brücke nach einem der vorstehenden Ansprüche, dadurch gekennzeichnet, dass zumindest der Vorsprung (14) an einem Ende des Schaftes (1) zur Verdrehsicherheit der Brücke in Rillenlängsrichtung eine Länge aufweist, die größer ist als die Breite der Rille (5)

5. Brücke nach Anspruch 4, dadurch gekennzeichnet, dass der Vorsprung (14) an einem Ende des Schaftes (1) länglich ausgebildet ist, während der Vorsprung (13) am anderen Ende als Zapfen mit einem der Breite der Rille (4) entsprechenden Durchmesser ausgebildet ist.

6. Brücke nach Anspruch 4 oder 5, dadurch gekennzeichnet, dass der längliche Vorsprung (14) exzentrisch zum Schaft (1) angeordnet ist.

7. Brücke nach einem der vorstehenden Ansprüche, dadurch gekennzeichnet, dass die Stirnflächen durch Scheiben (11, 12) gebildet werden.

8. Brücke nach Anspruch 1, dadurch gekennzeichnet, dass die beiden mit Vorsprung (13, 14) und Stirnfläche versehenen Schaftteile (17, 18) einstückig ausgebildet sind.

9. Brücke nach einem der vorhergehenden Ansprüche, dadurch gekennzeichnet, dass der Schaft (1) mit einer Umhüllung (22) versehen ist.

10. Brücke nach Anspruch 9, dadurch gekennzeichnet, dass die Umhüllung (22) durch eine Faden-Umwicklung gebildet wird.
